# EUROPEAN PATENT APPLICATION

(11) **EP 3 276 168 A1**
(43) Date of publication of application: **31.01.2018**
(21) Application number: 16181043.7
(22) Date of filing: 25.07.2016
(51) Int. Cl.: F03D 17/00, F03D 7/04

(54) **CONTROLLING A SAFETY SYSTEM OF A WIND TURBINE**

(71) Applicant: Siemens Aktiengesellschaft, 80333 München (DE)
(72) Inventor: Egedal, Per, 7400 Herning (DK)

(57) **Abstract**

A system is proposed for controlling a safety system (160) of a wind turbine (100), comprising
- at least one sensor device (150) assignable to at least one rotor blade (140),
- the at least one sensor device (150) comprising
- a measuring unit for capturing at least one rotor blade characteristic of the at least one rotor blade (140),
- a self powered energy supply unit,
- a control unit for processing the captured rotor blade characteristic, and
- a wireless transmitter unit for wireless transfer of rotor blade information based on the processed rotor blade characteristic

- a receiver unit (155) assignable to the safety system (160) of the wind turbine (100), wherein the receiver unit (155) is configured
- to receive the wireless transferred rotor blade information (151), and
- to control the safety system (160) of the wind turbine (100) based on the received rotor blade information.

Further, a sensor device, a rotor blade and a receiver unit as well as a wind turbine are suggested.

## Description

The invention relates to a system for controlling a safety system of a wind turbine. In addition, an according sensor device, a rotor blade, a receiver unit and a wind turbine are suggested.

For wind turbines to be an attractive electrical power source, energy provided by the wind turbine must be cheap and reliable. To reduce the cost of energy, the trend in wind turbine design has been leading towards increasingly larger wind turbines. Along with the increase in size, the complexity of the designs has also increased.

As control systems and mechanical structures of wind turbines have become increasingly complex, it has simultaneously become difficult to guarantee that a wind turbine structure is not damaged in any give situation. Faults in the control system, e.g., could lead to inappropriate behavior of the wind turbine, which could potentially lead to a structural breakdown. In addition to that, external events such as, e.g., wind gusts may also cause the system to get damaged.

To avoid damage to the wind turbine, a safety system may be implemented in the wind turbine. One possible purpose of such a safety system may be to keep mechanical and electrical components of the wind turbine from being damaged whenever a critical a critical situation arises given some internal or external event.

In case of ice or high turbulence for instance there may be the situation that wind turbine rotor blades start to vibrate. Resulting oscillations caused by those vibrations may typically direct in the edge vice direction and may be harmful for the blade in case of not being stopped or dampened.

By way of example, a primary layer protection function may be implemented in the control system of the wind turbine to detect and damp upcoming vibrations.

As a further option, a secondary layer protection function may be implemented in the wind turbine monitoring, e.g., a vibration or oscillation level of the rotor blades thereby initiating a stop of the wind turbine by use of, e.g., a safe stop function in case of a monitored vibration level beyond a defined vibration level threshold ("excessive blade vibrations").

According to a further exemplary option, the secondary layer protection functionality may be part of the safety system of the wind turbine, following a design requirement like, e.g., redundancy according to ISO EN 13849.

Monitoring blade vibrations and in particular identifying excessive blade vibrations may be based on specific vibration sensors located in a nacelle of the wind turbine. Consequently, in case of large rotor blade vibrations, the nacelle will mainly vibrate with the same frequency of the blade vibrations plus or minus a rotation frequency of the rotor. The known problem of that approach is an existing transfer function defining a relation between the rotor blade vibrations and the measured nacelle vibration wherein the transfer function disadvantageously varies with a rotor speed and a tower stiffness of the wind turbine. As a detrimental consequence, the precision of that approach is not that accurate for providing a proper safety system. To cover any uncertainties, a lower vibration level threshold has to be implemented in the safety system with the consequence of a less effective energy production of the wind turbine.

The object is thus to overcome the aforementioned disadvantages and in particular to provide an improved approach for controlling a safety system of a wind turbine.

This problem is solved according to the features of the independent claims. Further embodiments result from the depending claims.

In order to overcome this problem, a system is provided for controlling a safety system of a wind turbine, comprising,
- at least one sensor device assignable to at least one rotor blade,
- the at least one sensor device comprising
   - a measuring unit for capturing at least one rotor blade characteristic of the at least one rotor blade,
   - a self powered energy supply unit,
   - a control unit for processing the captured rotor blade characteristic, and
   - a wireless transmitter unit for wireless transfer of rotor blade information based on the processed rotor blade characteristic
- a receiver unit assignable to the safety system of the wind turbine, wherein the receiver unit is configured
   - to receive the wireless transferred rotor blade information, and
   - to control the safety system of the wind turbine based on the received rotor blade information.

A safety system may be any kind of system representing, e.g., a safety supervisor making sure that the wind turbine is not damaged during operation, in particular during extreme situations causing the wind turbine to leave the normal operation mode. In such kind of extreme situation, the safety system may be triggered to activate, e.g., a safe stop function or an emergency shutdown prior to any component being damaged.

The safety system may be triggered or controlled by a activation of trigger unit like, e.g., a receiver unit according to the proposed solution. The receiver unit may be a separate unit but may be also part of the safety system or a component thereof.

The proposed solution is based on one or more sensor devices being assignable to at least one rotor blade. According to a further embodiment several sensor devices may be assigned to one rotor blade.

The assignable sensor device may be a separate device which may be fixed, attached or mounted to the at least one rotor blade. Alternatively, the assignable sensor device may be a device being part of the at least one rotor blade, i.e. a device being implemented or integrated in the at least one rotor blade during a manufacturing process of the respective rotor blade.

The sensor device may be an independent, self powered device comprising several units representing different cooperating functionalities like, e.g. a measuring unit, a energy supply unit, a control unit and a wireless transmitter unit. Optionally further functionalities my be included in the sensor device.

Captured blade characteristic of the rotor blade may be any property measureable at the rotor blade like, e.g., "temperature" or "vibration".

"Vibration" of a rotor blade should be understood as the same as "acceleration" of a rotor blade. Accordingly, "vibrations" may be measured, e.g., by use of an accelerometer fixed to a rotor blade.

Processing of the captured blade characteristic may be a derivation, determination or calculation of at least one blade parameter based on the captured blade characteristic like, e.g. determining a frequency and/or amplitude of the captured vibrations of the rotor blade thereby providing blade-specific information ("rotor blade information") or at least one signal representing the rotor blade information. Further, the rotor blade information may be provided based on several blade parameter or a combination thereof.

It should be noted that "processing" may be also configured such that the captured blade characteristic (like, e.g., signals representing measurement results) are transformed in a proper data format suitable for being used by a data transmission technology like, e.g. a wireless transmission technology. Thereby, the aforementioned determination of rotor blade information may be provided by a different unit receiving those transmitted data, like, e.g., the receiver unit.

Optionally, further processed blade-specific information may be determined and provided as rotor blade information like, e.g., determining a blade-specific vibration level based on the determined amplitude of the vibration.

Further examples of resulting rotor blade information may be
- peak to peak amplitude,
- Root Mean Square (RMS),
- True RMS,
- Zero-Peak

Energy supply system may be any self-powering system providing the sensor device with energy. As an example, the energy supply system may comprise a recovery unit suitable for recovering electrical energy from nearby environment like, e.g., one or more solar cells using the sun as an energy source.

The receiver unit may be any device or unit suitable for receiving information or signals sent out via a wireless transmitter. The receiver unit may be placed at a component of the wind turbine (like, e.g. in the nacelle or within the rotor hub), preferably near to the control system of the wind turbine or the safety system or a component or module thereof.

Based on the received blade information like, e.g., based on the provided vibration level of one or more rotor blades, the safety system of the wind turbine may be triggered or activated. As an example, the safety system may be triggered to initiate a emergency stop (e.g. by activating a "safe pitch function") in case of a determined blade specific vibration level beyond a defined vibration level threshold representing a excessive vibration level.

The proposed solution allows the implementation of a safety system monitoring the blade vibration directly at the at least one rotor blade based on a sensor device using its own autarkic energy supply system, preferably a self powered energy supply system providing the following advantages:
By capturing the at least one characteristic directly at the at least one rotor blade a very accurate measurement of the characteristic may be provided allowing, e.g., a very accurate vibration measurement.

Providing more accurate measurements allows a reduced number of necessary configurations of the safety system with the positive effect of a reduced number of necessary versions on stock and spare parts.

As the sensor device is based on a self powered energy supply system and by implementing a wireless transfer of information no additional wires or cables have to be implemented in the rotor blade. Thus, the risk of a lightning strike may be negligible.

The sensor device may be installed at the rotor blade as retrofit. Advantageously the proposed solution may be easily installed on wind turbines already installed thereby providing a lifetime extension of the wind turbine.

The receiver unit may be integrated directly in the safety system of the wind turbine providing a safety output relay to the safety system.

In an embodiment, the receiver unit comprises a signal generation unit for generating an activation signal based on the received rotor blade information, the activation signal being provided to a safety output of the receiver unit.

In another embodiment, the safety output of the receiver unit is connected to a safety input of the safety system.

In a further embodiment, the receiver unit is an integrated part of the safety system.

In a next embodiment, the self powered energy supply unit comprises at least one out of
- at least one solar cell,
- at least one battery

According to a further embodiment, the measuring unit is configured to capture at least one out of following blade characteristics:
- "temperature",
- "vibration"

In a next embodiment, the control unit is configured to determine a frequency and/or an amplitude of the captured vibration.

It is also an embodiment that the control unit is configured to determine a blade-specific vibration level based on the determined amplitude of the vibration.

The problem stated above is also solved by a sensor device assignable to a rotor blade of a wind turbine and being suitable for a system as described herein, comprising
- a measuring unit for capturing at least one rotor blade characteristic of the at least one rotor blade,
- a self powered energy supply unit,
- a control unit for processing the captured rotor blade characteristic, and
- a wireless transmitter unit for wireless transfer of rotor blade information based on the processed rotor blade characteristic.

The problem stated above is also solved by a rotor blade comprising at least one sensor device as described herein.

It is also an embodiment that the at least one sensor device is fixed to the rotor blade as retrofit.

Pursuant to another embodiment, the at least one sensor device is an integrated part of the rotor blade.

The problem stated above is also solved by a receiver unit assignable to a safety system of a wind turbine and suitable for being used in a system as described herein,
- the receiver unit being configured
   - to receive the wireless transferred rotor blade information, and
   - to control the safety system of the wind turbine based on the received rotor blade information.

The problem stated above is also solved by a wind turbine comprising at least one system for controlling a safety system of a wind turbine as described herein.

Embodiments of the invention are shown and illustrated in the following figure:

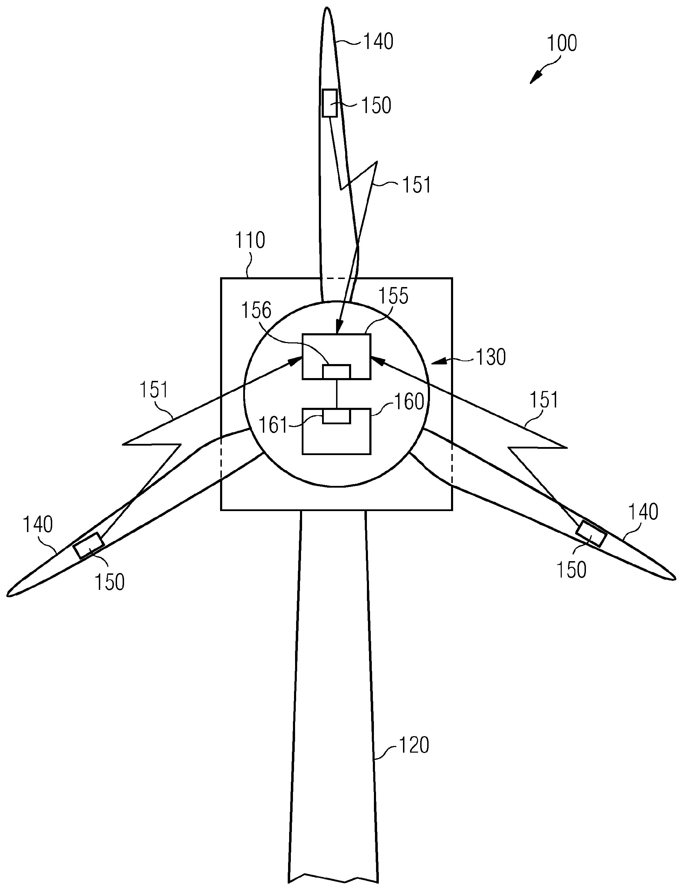

- Fig.1: shows a schematically front view of an exemplary embodiment of a wind turbine including a system for controlling a safety system of the wind turbine according to the proposed solution.

Fig.1 shows a schematically front view of an exemplary embodiment of a wind turbine 100 comprising a nacelle 110 being rotatable mounted on top of a tower 120. A rotor 130 is attached to an upwind side of the nacelle. The rotor 130 includes a central rotor hub and a plurality of rotor blades 140 mounted to and extending radially from the rotor hub defining a rotor plane.

According to an exemplary embodiment a sensor device 150 is assigned to each rotor blade 140. In the scenario of Fig.1 the sensor device 150 is a self powered device based on a solar cell comprising a measuring device capturing blade specific vibrations of the respective rotor blade 140.

As an example, the sensor device 150 may be installed on the blade 140 as retrofit. Alternatively, the sensor device 150 may be integrated part of the rotor blade 140 being implemented in the rotor blade 140 during a manufacturing process of the rotor blade 140.

The sensor device 150 further comprises a wireless transmitter unit for wireless transfer of blade information based on the captured blade specific vibrations.

Further, a receiver unit 155 according to the proposed system is located in the rotor hub. The receiver unit 155 is connected to a safety system 160 of the wind turbine 100 which may be also placed in the rotor hub. Alternatively, only a component of the safety system 160 may be located in the rotor hub and being connected to the receiver unit 150 wherein the remaining parts of the safety system may be located apart the rotor hub, e.g. in the nacelle 110.

According to an exemplary embodiment, the component of the safety system 160 may represent a safe pitch functionality of the safety system.

The sensor device 150 may further comprise a control unit for processing the captured blade specific vibrations. As an example, the control unit determines a vibration level based on the captured blade specific vibrations. The determined vibration level will be wireless transferred as rotor blade information (indicated by an arrow 151) via the wireless transmitter unit of the sensor device 150 to the wireless receiver unit 155 located in the rotor hub.

In case the transferred vibration level exceeds a predefined threshold value representing, e.g., an excessive vibration level, an activation information or signal will be generated by the receiver unit 150. The activation signal (indicated by an arrow 157 in Fig.1) will be provided as a trigger via an safety output 156 of the receiver unit 155 to a safety input 161 of the safety system 160. Triggered by the activation signal 157 the safe pitch functionality of the safety system 160 may be activated initiating an emergency stop or shutdown of the wind turbine.

As an example, the sensor device 160 may be a sensor as disclosed in US 2015/0035548A1.

Although the present invention has been disclosed in the form of preferred embodiments and variations thereon, it will be understood that numerous additional modifications and variations could be made thereto without departing from the scope of the invention.

For the sake of clarity, it is to be understood that the use of "a" or "an" throughout this application does not exclude a plurality, and "comprising" does not exclude other steps or elements. The mention of a "unit" or a "module" does not preclude the use of more than one unit or module.

## Claims

1. A system for controlling a safety system (160) of a wind turbine (100), comprising
- at least one sensor device (150) assignable to at least one rotor blade (140),
- the at least one sensor device (150) comprising
- a measuring unit for capturing at least one rotor blade characteristic of the at least one rotor blade (140),
- a self powered energy supply unit,
- a control unit for processing the captured rotor blade characteristic, and
- a wireless transmitter unit for wireless transfer of rotor blade information based on the processed rotor blade characteristic
- a receiver unit (155) assignable to the safety system (160) of the wind turbine (100), wherein the receiver unit (155) is configured
- to receive the wireless transferred rotor blade information (151), and
- to control the safety system (160) of the wind turbine (100) based on the received rotor blade information.

2. The system according to claim 1, wherein
the receiver unit (155) comprises a signal generation unit for generating an activation signal (157) based on the received rotor blade information, the activation signal (157) being provided to a safety output (156) of the receiver unit (155).

3. The system according to claim 2, wherein
the safety output (156) of the receiver unit (155) is connected to a safety input (161) of the safety system (160).

4. The system according to any of the preceding claims,
wherein
the receiver unit (155) is an integrated part of the safety system (160).

5. The system according to any of the preceding claims,
wherein
the self powered energy supply unit comprises at least one out of
- at least one solar cell,
- at least one battery

6. The system according to any of the preceding claims,
wherein the measuring unit is configured to capture at least one out of following blade characteristic:
- "temperature",
- "vibration"

7. The system according to claim 6, wherein
the control unit is configured to determine a frequency and/or an amplitude of the captured vibration.

8. The system according to claim 7,
wherein the control unit is configured to determine a blade-specific vibration level based on the determined amplitude of the vibration.

9. A sensor device (150) assignable to a rotor blade (140) of a wind turbine (100) and being suitable for a system according to any of the preceding claims 1 to 8, comprising
- a measuring unit for capturing at least one rotor blade characteristic of the at least one rotor blade (140),
- a self powered energy supply unit,
- a control unit for processing the captured rotor blade characteristic, and
- a wireless transmitter unit for wireless transfer of rotor blade information based on the processed rotor blade characteristic.

10. A rotor blade (140) comprising at least one sensor device according to claim 9.

11. The rotor blade (140) according to claim 10, wherein the at least one sensor device (150) is fixed to the rotor blade as retrofit.

12. The rotor blade (140) according to claim 10, wherein the at least one sensor device (150) is an integrated part of the rotor blade (140).

13. A receiver unit (155) assignable to a safety system of a wind turbine (100) and suitable for being used in a system according to any of preceding claims 1 to 8,
- the receiver unit (155) being configured
- to receive the wireless transferred rotor blade information (151), and
- to control the safety system (160) of the wind turbine (100) based on the received rotor blade information.

14. A wind turbine (100) comprising at least one system for controlling a safety system (160) of a wind turbine (100) according to any of the preceding claims 1 to 8.
